(19) Europäisches Patentamt / European Patent Office / Office européen des brevets

(11) **EP 4 354 623 A1**

(12) **EUROPEAN PATENT APPLICATION**
published in accordance with Art. 153(4) EPC

(43) Date of publication:
**17.04.2024   Bulletin 2024/16**

(21) Application number: **22885715.7**

(22) Date of filing: **14.10.2022**

(51) International Patent Classification (IPC):
*H01M 50/291* (2021.01)      *H01M 50/209* (2021.01)

(52) Cooperative Patent Classification (CPC):
**H01M 50/209; H01M 50/244; H01M 50/291;
H01M 50/293;** Y02E 60/10

(86) International application number:
**PCT/CN2022/125493**

(87) International publication number:
**WO 2023/071837 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **29.10.2021   CN 202122624721 U**

(71) Applicant: **Contemporary Amperex Technology
Co., Limited
Ningde, Fujian 352100 (CN)**

(72) Inventors:
• **YU, Laijuan
  Ningde, Fujian 352100 (CN)**

• **CHEN, Xingdi
  Ningde, Fujian 352100 (CN)**
• **ZHANG, Ning
  Ningde, Fujian 352100 (CN)**
• **WU, Anwei
  Ningde, Fujian 352100 (CN)**
• **XU, Ye
  Ningde, Fujian 352100 (CN)**
• **CHEN, Renyu
  Ningde, Fujian 352100 (CN)**

(74) Representative: **Rowlands, Stuart Michael et al
Maucher Jenkins
Seventh Floor Offices
Artillery House
11-19 Artillery Row
London SW1P 1RT (GB)**

(54)   **BATTERY AND POWER CONSUMPTION DEVICE**

(57)   The present application provides a battery and a power consumption device. According to the battery provided by the present application, blocking members are arranged between two adjacent rows of battery cells in a length direction of the battery cells. In the process of assembling the battery cells into a box, the adhesive at the bottom of the battery cell is blocked by the blocking member when being extruded to diffuse from a gap composed of housing chamfers to an end cover, so that the adhesive is prevented from overflowing to the end cover, and the safety performance of the battery is improved.

FIG. 6

EP 4 354 623 A1

## Description

This application claims priority to Chinese Patent Application No.202122624721.8 filed on October 29, 2021 and entitled "BATTERY AND ELECTRIC DEVICE", which is incorporated herein by reference in its entirety.

## TECHNICAL FIELD

This application relates to the field of battery technologies, and in particular, to a battery and an electric device.

## BACKGROUND

In the existing battery manufacturing process, the problem of adhesive overflow often occurs during battery assembly. Adhesive overflow affects the safety performance of the battery during use. Therefore, eliminating adhesive overflow during battery assembly is an urgent problem that needs to be addressed.

## TECHNICAL PROBLEM

In view of the foregoing problem, this application provides a battery and an electric device.

## TECHNICAL SOLUTION

A first aspect of this application provides a battery, including: at least four battery cells, where at least two of the battery cells are arranged in a battery row along a length direction of the battery cells, and at least two of the battery cells are arranged in a battery column along a width direction of the battery cells; and a blocking member, where the blocking member is placed in a first gap created by two adjacent battery rows, and the blocking member is configured to block adhesive on a bottom surface of the battery cell from spreading towards an end cover direction of the battery cell.

In an embodiment of this application, the blocking member includes: a blocking portion, where the blocking portion is provided at one end of the blocking member close to a bottom surface of the battery cell, and the blocking portion is configured to block an adhesive on the bottom surface of the battery cell from spreading towards an end cover direction of the battery cell; and a fixing portion, where the fixing portion is provided at another end of the blocking member, and the fixing portion is configured to connect to a lengthwise side of the battery cell. The blocking member being provided with the fixing portion allows for a stable connection between the blocking member and the battery cell.

In an embodiment of this application, the blocking portion includes an extension portion, the extension portion being located in a second gap created by two adjacent battery columns and extending along a height direction of the battery cell away from the fixing portion.

This solution can improve the effect of the blocking member in blocking the adhesive.

In an embodiment of this application, the blocking portion includes an extension portion, the extension portion being located in a second gap created by two adjacent battery columns and extending along the width direction of the battery cell away from the fixing portion. This solution can improve the effectiveness of the blocking member in blocking the adhesive.

In an embodiment of this application, the battery row includes n battery cells, and the blocking portion includes m extension portions, where $1 \leq m \leq n - 1$. This solution can improve the effectiveness of the blocking member in blocking the adhesive.

In an embodiment of this application, the battery row includes n battery cells, and in the length direction, length of the battery cell is L1 and length of the blocking member is L2; where $L1 < L2 \leq n * L1$. This solution can reduce the interference between the blocking member and a box.

In an embodiment of this application, when the length L1 and the length L2 are measured in millimeters, $n * L1 - 10 \leq L2 \leq n * L1$. This solution can reduce the interference between the blocking member and the box.

In an embodiment of this application, in the width direction, width of the battery cell is W1 and width of the blocking member is W2, where $0.1 * W1 \leq W2 \leq 0.15 * W1$. This solution can improve the energy density of the battery.

In an embodiment of this application, the blocking member is made of rubber. This solution allows the blocking member to act as a buffer for the expansion tension between battery cells.

A second aspect of the application provides an electric device including any battery provided in the first aspect of the application, where the battery is configured to supply electric energy.

The foregoing description is merely an overview of the technical solution of this application. For a better understanding of the technical means in this application such that they can be implemented according to the content of the specification, and to make the above and other objectives, features and advantages of this application clearer and easier to understand, the following describes specific embodiments of this application.

## BENEFICIAL EFFECTS

In the process of assembling the battery cells in the box, the adhesive at the bottom of the battery cell, when spreading under compressing from the gap created by the housing chamfers to the end cover, is blocked by the blocking member, thus preventing the adhesive from spreading and overflowing to the end cover, improving the safety performance of the battery.

## BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, same parts are represented by same reference symbols. In the accompanying drawings:

FIG. 1 is a schematic structural diagram of a connection between battery cells in a battery in the prior art;

FIG. 2 is a schematic structural diagram of a vehicle according to an embodiment of this application;

FIG. 3 is a schematic structural diagram of a battery pack according to an embodiment of this application;

FIG. 4 is a schematic structural diagram of a battery module according to an embodiment of this application;

FIG. 5 is a schematic exploded view of a battery cell according to an embodiment of this application;

FIG. 6 is a schematic partial exploded view of a battery according to an embodiment of this application;

FIG. 7 is a schematic diagram of a partial structure of a battery according to an embodiment of this application;

FIG. 8 is a schematic diagram of a partial structure of battery containing a blocking member according to an embodiment of this application;

FIG. 9 is a schematic structural diagram of a blocking member containing an extension portion according to an embodiment of this application;

FIG. 10 is a front view of a battery including the blocking member shown in FIG. 9 according to an embodiment of this application;

FIG. 11 is a schematic structural diagram of another blocking member containing an extension portion according to an embodiment of this application;

FIG. 12 is a schematic top view of a battery including the blocking member shown in FIG. 11 according to an embodiment of this application; and

FIG. 13 is a schematic diagram of length and width of a battery cell and a blocking member according to an embodiment of this application.

Reference signs in specific embodiments are as follows:

1. vehicle; 10. battery; 11. controller; 12. motor; 20. battery module; 201. first gap; 202. second gap; 20a. battery row; 20b. battery column; 21. battery cell; 211. end cover; 212. housing; 212R. housing chamfer; 213. electrode assembly; 30. box; 301. first portion; 302. second portion; 40. blocking member; 41. blocking portion; 41a. extension portion; and 42. fixing portion.

## EMBODIMENTS OF THE PRESENT INVENTION

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

It should be noted that, unless otherwise specified, the technical terms or scientific terms used in the embodiments of the present application shall have ordinary meanings understood by persons skilled in the art to which the embodiments of the present application belong.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In addition, the technical terms "first", "second", and the like are merely for the purpose of description, and shall not be understood as any indication or implication of relative importance or any implicit indication of the number of technical features indicated. In the description of this application, "a plurality of" means at least two unless otherwise specifically stated.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

In the description of the embodiments of the present application, unless otherwise clearly specified and defined, a first feature being "on" or "under" a second feature may mean that the first and second features are in direct contact, or the first and second features are in indirect contact through an intermediary. Moreover, that the first feature is "above", "over", or "on" the second feature may mean that the first feature is directly above or obliquely above the second feature or simply mean that the first feature has a higher level than the second feature. That the first feature is "below", "beneath", and "under" the second feature may mean that the first feature is directly below or obliquely below the second feature or simply mean that the first feature has a lower level than the second feature.

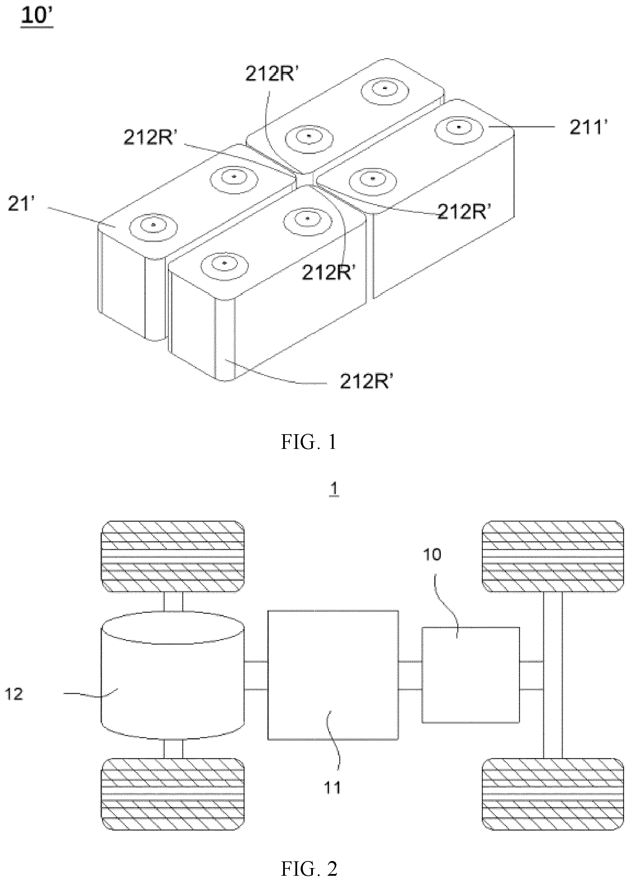

In existing battery manufacturing and assembly processes, housing edges of a battery cell are chamfered to avoid the housing edges being too sharp and puncturing the insulating film. FIG. 1 is a schematic structural diagram of a connection between battery cells 21' in a battery 10' in the prior art. As shown in FIG. 1, when the battery cells 21' are formed into a double-row or multi-row module, every four adjacent battery cells 21' have four housing chamfers 212R' forming a gap. Consequently, during the assembly of battery cells 21' into a box, an adhesive applied to the bottom surface of the battery cell 21' spreads from the gap along the direction to the end cover 211' of the battery cell 21', and may even overflow to the end cover 211' and solidify into a block. As a result, in the process of cyclic swelling, the stress at the weld seams of the end cover 211' of the battery cell 21' is not able to be released, causing the cracking of the end cover 211' and electrolyte leakage of the battery cell 21', which seriously affects the safety performance of the battery 10'.

In this regard, the applicant has found that a blocking member can be provided between two adjacent rows of battery cells along the length direction of the battery cells. In the process of assembling the battery cells in the box, the adhesive at the bottom of the battery cell, when spreading under compressing from the gap created by the housing chamfers to the end cover, is blocked by the blocking member, thus preventing the adhesive from overflowing to the end cover, thereby improving the safety performance of the battery.

This application provides a battery and an electric device using the battery. The battery provided in this application may be a battery module or a battery pack, or a primary battery and a secondary battery. The secondary battery, for example, includes a nickel-metal hydride battery, a nickel-cadmium battery, a lead-acid (or lead storage) battery, a lithium-ion battery, a sodium-ion battery, a polymer battery, and the like. The batteries provided in this application are applicable to various electric devices using batteries, for example, mobile phones, portable devices, notebook computers, electric bicycles, electric toys, electric tools, electric vehicles, ships, and spacecraft. For example, the spacecraft includes planes, rockets, space shuttles, spaceships, and the like; and the batteries are configured to supply electric energy for the foregoing electric devices.

It should be understood that the technical solutions described in the embodiments of this application are not only applicable to the batteries and electric devices described above, but also applicable to all batteries including a box and electric devices using batteries. However, for the brevity of description, in the following embodiments, the electric vehicle is used as an example for description.

Refer to FIG. 2. FIG. 2 is a schematic structural diagram of a vehicle 1 according to some embodiments of this application. The vehicle 1 may be a fossil fuel vehicle, a natural-gas vehicle, or a new energy vehicle. The new energy vehicle may be a battery electric vehicle, a hybrid electric vehicle, a range-extended electric vehicle, or the like. The vehicle 1 is provided with a battery 10 inside, and the battery 10 may be disposed at the bottom, front, or rear of the vehicle 1. The battery 10 may be configured to supply power to the vehicle 1. For example, the battery 10 may be used as an operational power supply for the vehicle 1. The vehicle 1 may further include a controller 11 and a motor 12, where the controller 11 is configured to control the battery 10 to supply power to the motor 12, for example, to satisfy power needs of start, navigation, and driving of the vehicle 1.

In some embodiments of this application, the battery 10 can be used as not only the operational power source for the vehicle 1 but also a driving power source for the vehicle 1, replacing or partially replacing fossil fuel or natural gas to provide driving traction for the vehicle 1.

In order to meet different requirements for power use, the battery 10 may include a plurality of battery cells 21. A battery cell 21 is a smallest element constituting a battery module or a battery pack. The plurality of battery cells 21 can be connected in series and/or in parallel through an electrode terminal for various application scenarios. The battery mentioned in this application includes a battery module or a battery pack. The plurality of battery cells 21 may be connected in series, parallel, or series-and-parallel, and being connected in series-and-parallel means a combination of series and parallel connections. The battery 10 may also be called a battery pack. The plurality of battery cells 21 in the embodiments of this application may directly constitute a battery pack, or may first constitute battery modules 20, and then the battery modules 20 constitute a battery pack.

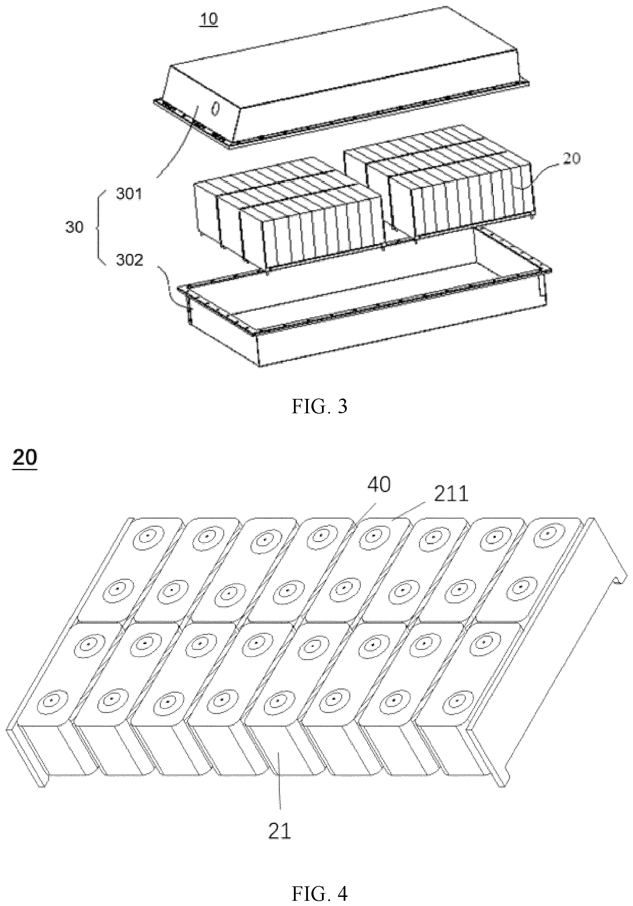

FIG. 3 is a schematic structural diagram of a battery 10 according to an embodiment of this application. In FIG. 3, the battery 10 may include a plurality of battery modules 20 and a box 30. The plurality of battery modules 20 are accommodated in the box 30. The box 30 is configured to accommodate the battery cells 21 or the battery modules 20 to prevent a liquid or another foreign matter from affecting charging or discharging of the battery cells 21. The box 30 may be a simple three-dimensional structure such as a rectangular structure or a cylindrical structure or a spherical structure or may be a complex three-dimensional structure formed by combining simple three-dimensional structures such as a rectangular structure or a cylindrical structure or a spherical structure. This is not limited in the embodiments of this application. The box body 30 may be made of an alloy material such as an aluminum alloy and an iron alloy, a polymer material such as polycarbonate and polyisocyanurate foam, or a composite material produced from materials such as glass fiber and epoxy resin. This is also not limited in the embodiments of this application.

In some embodiments, the box 30 may include a first portion 301 and a second portion 302. The first portion 301 and the second portion 302 cover each other to jointly define a space for accommodating the battery cells 21. The second portion 302 may be a hollow structure with one end open, the first portion 301 may be a plate structure, and the first portion 301 covers an open side of the second portion 302 so that the first portion 301 and the second portion 302 jointly define a space for accommodating the battery cells 21. The first portion 301 and the second portion 302 may both be a hollow structure with one side open, and the open side of the first portion 301 covers the open side of the second portion 302.

FIG. 4 is a schematic structural diagram of a battery module 20 according to an embodiment of this application. In FIG. 4, the battery module 20 may include a plurality of battery cells 21. The plurality of battery cells 21 may first be connected in series, parallel, or series-and-parallel to constitute battery modules 20, and then a plurality of battery modules 20 may be connected in series, parallel, or series-and-parallel to constitute a battery 10. In this application, the battery cell 21 may include a lithium-ion battery, a sodium-ion battery, a magnesium-ion battery, or the like. This is not limited in the embodiments of this application. The battery cell 21 may be cylindrical, flat, cuboid, or of other shapes, which is not limited in the embodiments of this application either. Battery cells 21 are typically divided into three types by packaging method: cylindrical cell 21, prismatic cell 21, and pouch cell 21. The type of battery is not limited in the embodiments of this application either. However, for the brevity of description, the following embodiments are all described by taking a prismatic cell 21 as an example.

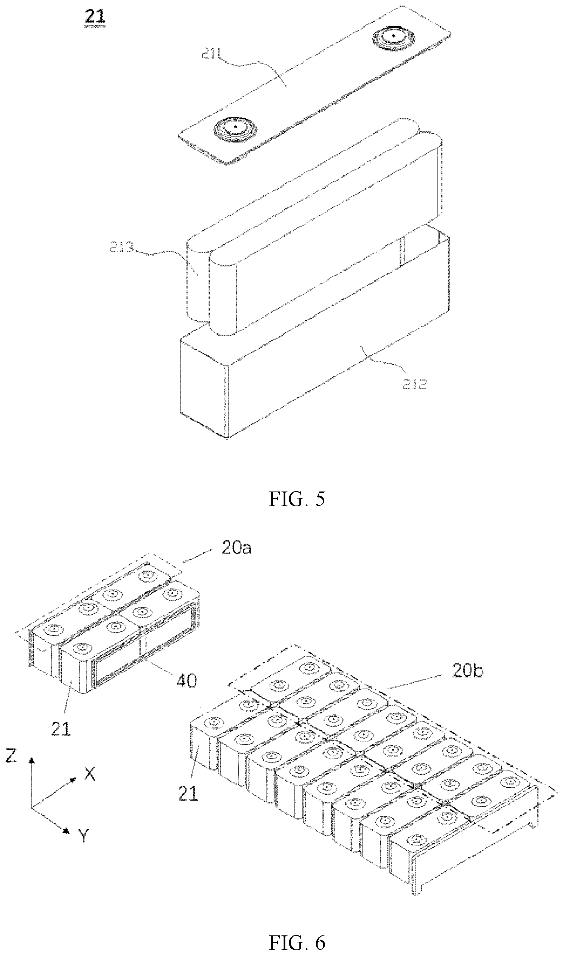

Referring to FIG. 5, FIG. 5 is a schematic exploded view of a battery cell 21 according to some embodiments of this application. As shown in FIG. 5, the battery cell 21 may include an end cover 211, a housing 212, an electrode assembly 213, and an electrolyte (not shown in the figure). The electrode assembly 213 may include a positive electrode plate, a negative electrode plate, and a separator (none are shown in the figure). Working of the battery cell 21 mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The positive electrode current collector includes a positive electrode current collecting portion coated with the positive electrode active substance layer. With a lithium-ion battery as an example, its positive electrode current collector may be made of aluminum, and its positive electrode active substance layer includes a positive electrode active substance which may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The negative electrode current collector includes a negative electrode current collecting portion coated with the negative electrode active substance layer. The negative electrode current collector may be made of copper, and the negative electrode active substance layer includes a negative electrode active substance which may be carbon, silicon, or the like. The separator may be made of PP (polypropylene, polypropylene), PE (polyethylene, polyethylene), or the like. In addition, the electrode assembly 213 may be a wound structure or a laminated structure, but the embodiments of this application are not limited thereto. The housing 212 may have an opening at one end or have an opening at two ends. The end cover 211 covers the opening of the housing 22 to form, together with the housing 212, an accommodating space for accommodating the electrode assembly 213 and the electrolyte. Optionally, the housing 212 and the end cover 211 may be made of the same material, for example, both the housing 212 and the end cover 211 may be made of aluminum, so as to facilitate the welding of the housing 212 and the end cover 211. Alternatively, the housing 212 and the end cover 211 may be made of different materials, for example, the housing 212 and the end cover 211 may be made of different metals respectively, and the housing 212 and the end cover 211 may be connected through riveting or other manners.

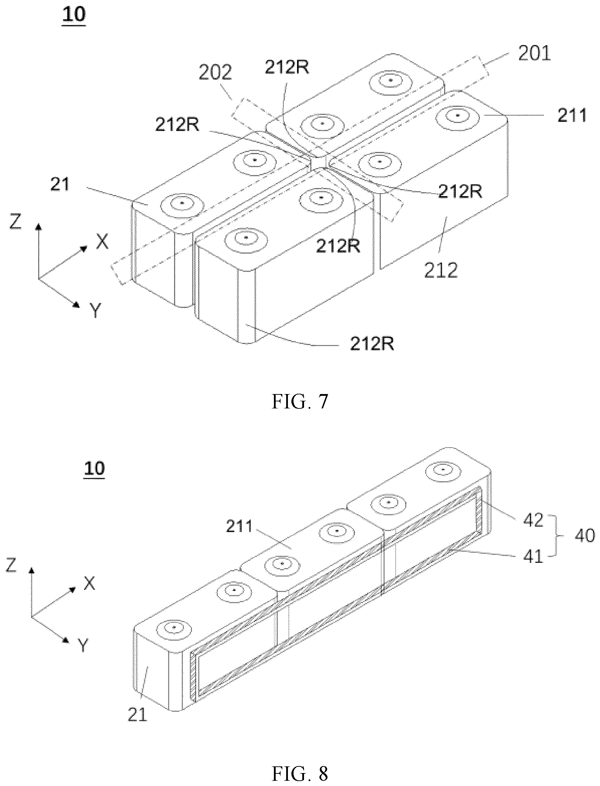

Referring to FIG. 6 and FIG. 7, FIG. 6 is a schematic partial exploded view of a battery 10 according to an embodiment of this application, and FIG. 7 is a schematic diagram of a partial structure of a battery 10 according to an embodiment of this application. A first aspect of this application provides a battery 10, including: at least four battery cells 21, where at least two of the battery cells 21 are arranged in a battery row 20a along a length direction of the battery cells 21, and at least two of the battery cells 21 are arranged in a battery column 20b along a width direction of the battery cells 21; and a blocking member 40, where the blocking member 40 is placed in a first gap 201 formed by two adjacent battery rows 20a, and the blocking member 40 is configured to block adhesive on a bottom surface of the battery cell 21 from spreading towards an end cover 211 direction of the battery cell 21.

The battery row 20a is formed by arranging a plurality of battery cells 21 along the length direction (that is, direction X in the figures) of the battery cells 21. Optionally, a quantity of battery cells 21 included in a battery row 20a may be greater than or equal to 2. As shown in FIG. 7, a first gap 201 is formed between two adjacent battery rows 20a.

A battery column 20b is formed by arranging a plurality of battery cells 21 along the width direction (that is, direction Y in the figures) of the battery cells 21. Optionally, a quantity of battery cells 21 included in a battery column 20b may be greater than or equal to 2. As shown in FIG. 7, a second gap 202 is formed between two adjacent battery columns 20b.

The blocking member 40 may be a strip structure or a frame-like structure. An outer surface of the blocking member 40 may be pleated to provide elasticity to the blocking member. The blocking member 40 may be made of an insulating material with good elasticity, for example, rubber, sponge, or foam board, to absorb vibration, thereby reducing the impact of vibrations on the battery 10 and improving the cycle life and safety of the battery 10. The blocking member 40 may be made of rubber, so that the blocking member 40 may act as a buffer for the expansion tension between battery cells 21.

The bottom surface (not shown in the figure) of the battery cell 21 is a surface of the battery cell 21 that is away from the end cover 211 and that formed by extending along the length direction and the width direction of the battery cell 21.

The adhesive (not shown in the figure) is used to bond the battery cell 21 and the box 30. The adhesive may be a fluid such as glue. The material of the adhesive may include one or more of polyvinylidene fluoride, polytetrafluoroethylene, sodium carboxymethylcellulose, styrene-butadiene rubber, polyacrylic acid, polyacrylate, sodium polyacrylate, alginic acid, sodium alginate, polyurethane, acrylic acid, epoxy acrylic, or modified silane. The adhesive may be applied to the bottom surface of the battery cell 21 for connecting the battery cell 21 to the box 30.

Providing the blocking member 40 between two adjacent battery rows 20a can prevent the adhesive between the battery cells 21 from spreading and overflowing to the end cover 211, thereby improving the safety performance of the battery 10.

Referring to FIG. 8, FIG. 8 is a schematic diagram of a partial structure of a battery 10 containing the blocking member 40 according to an embodiment of this application. Optionally, the blocking member 40 includes: a blocking portion 41, where the blocking portion 41 is provided at one end of the blocking member 40 close to a bottom surface of the battery cell 21, and the blocking portion 41 is configured to block the adhesive on the bottom surface of the battery cell 21 from spreading towards the end cover 211 direction of the battery cell 21; and a fixing portion 42, where the fixing portion 42 is provided at another end of the blocking member 40, and the fixing portion 42 is configured to connect to a lengthwise side of the battery cell 21.

A side of the battery cell 21 (not shown in the figure) includes a surface of the battery cell 21 formed by extending in the length direction and the height direction (that is, direction Z in the figures) of the battery cell 21 and a surface formed by extending in the width direction and the height direction of the battery cell 21. The lengthwise side of the battery cell 21 specifically is the side of the battery cell 21 formed by extending in the length direction and the height direction. The first gap 201 is formed between the lengthwise sides of two opposite battery cells 21 in two adjacent battery rows 20a.

When the blocking member 40 is a frame-like structure, the blocking portion 41 may be a border in the frame close to the bottom surface of the battery cell 21, and is configured to block the adhesive from spreading from the bottom surface towards the direction of the end cover 211. The fixing portion 42 may be the other three borders in the frame and is connected to the lengthwise side of the battery cell 21 to fix the relative position of the blocking member 40 and the battery cell 21. Optionally, the fixing portion 42 may be fixed to the side of the battery cell 21 by using glue.

The blocking member 40 being provided with the fixing portion 42 allows for a stable connection between the blocking member 40 and the battery cell 21.

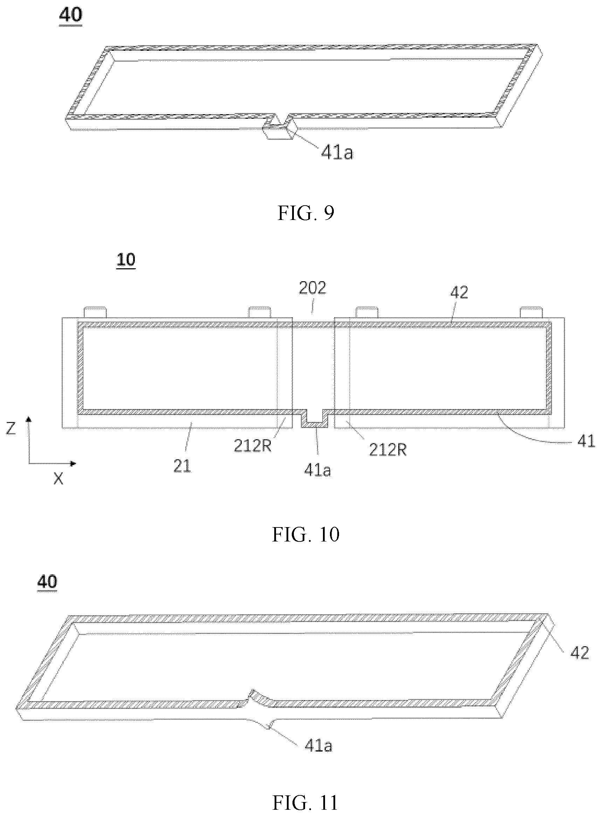

Referring to FIGs. 9 and 10, FIG. 9 is a schematic structural diagram of a blocking member 40 containing an extension portion 41a according to an embodiment of this application, and FIG. 10 is a front view of a battery 10 including the blocking member 40 shown in FIG. 9 according to an embodiment of this application. Optionally, the blocking portion 41 includes an extension portion 41a, where the extension portion 41a is located in a second gap 202 formed by two adjacent battery columns 20b and extends along the height direction of the battery cell 21 away from the fixing portion 42.

The second gap 202 is formed between widthwise sides of two opposite battery cells 21 in two adjacent battery columns 20b.

The extension portion 41a may be provided at a position where the first gap 201 intersects the second gap 202. As shown in FIG. 10, when the adhesive overflows from the bottom surface of the battery cell 21 to the direction of the end cover 211 due to compressing, the provision of the outwardly projecting extension portion 41a on the blocking portion 41 allows the adhesive to be first hindered by the extension portion 41a, and then the adhesive spreads to the two sides of the extension portion 41a after being hindered by the extension portion 41a. In other words, the adhesive spreads in a direction away from the gap enclosed by the housing chamfers 212R, thereby reducing the possibility of the adhesive entering the gap enclosed by the housing chamfers 212R. This enhances the effect of the blocking member 40 in blocking the adhesive, improving the safety performance of the battery 10.

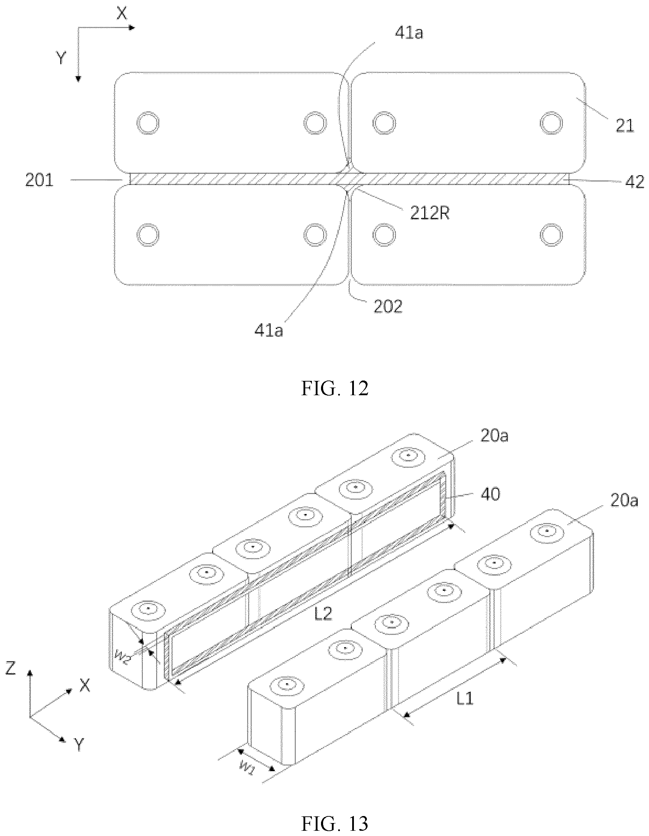

Referring to FIGs. 11 and 12, FIG. 11 is a schematic structural diagram of another blocking member 40 containing an extension portion 41a according to an embodiment of this application, and FIG. 12 is a schematic top view of a battery 10 containing the blocking member 40 shown in FIG. 11 according to an embodiment of this application. Optionally, the blocking portion 41 includes the extension portion 41a, where the extension portion 41a is located in a second gap 202 formed by two adjacent battery columns 20b and extends along the width direction of the battery cell 21 away from the fixing portion 42.

As shown in FIG. 11, the extension portion 41a extending along the width direction of the battery cell 21 away from the fixing portion 42 can increase the area of the extension portion 41a and further fill the gap enclosed by the housing chamfers 212R, thereby reducing the possibility of the adhesive entering the gap enclosed by the housing chamfers 212R. This enhances the effect of the blocking member 40 in blocking the adhesive, and improves the safety performance of the battery 10.

Optionally, the battery row 20a includes n battery cells 21, and the blocking portion 41 includes m extension portions 41a, where $1 \leq m \leq n - 1$. In other words, the blocking portion 41 provided between two adjacent battery rows 20a has at least one extension portion 41a and at most n - 1 extension portions 41a.

When the battery row 20a includes n battery cells, there are n - 1 gaps enclosed by the end cover chamfers 212R between two adjacent battery rows 20a. For example, as shown in FIG. 10, the battery row 20a includes two battery cells, and the blocking portion 41 includes one extension portion 41a. Optionally, m = n - 1, so that a quantity m of extension portions 41a included in the blocking portion 41 is equal to a quantity of gaps enclosed by the end cover chamfers 213R, thereby reducing the possibility of the adhesive entering the gaps enclosed by the end cover chamfers 212R. This enhances the effect of the blocking member 40 in blocking the adhesive, and improves the safety performance of the battery 10.

Referring to FIG. 13, FIG. 13 is a schematic diagram of length and width of a battery cell 21 and a blocking member 40 according to an embodiment of this application. Optionally, the battery row 20a includes n battery cells, and in the length direction, the length of the battery cell 21 is L1 and the length of the blocking member 40 is L2; where $L1 < L2 \leq n * L1$.

Optionally, the length L1 and the length L2 are measured in millimeters, where $n * L1 - 10 \leq L2 \leq n * L1$.

The length L1 of the battery cell 21 refers to a size of the battery cell 21 in the length direction. The length L2 of the blocking member 40 refers to a size of the blocking member 40 in the length direction of the battery cell 21.

The length L2 of the blocking member 40 satisfying the above relationship can reduce the interference between the blocking member 40 and the box 30.

Referring to FIG. 13, optionally, in the width direction, the width of the battery cell 21 is W1 and the width of the blocking member 40 is W2, where $0.1 * W1 \leq W2 \leq 0.15 * W1$.

The width W1 of the battery cell 21 refers to a size of the battery cell 21 in the width direction. The width W2 of the blocking member 40 refers to a size of the blocking member 40 in the width direction of the battery cell 21.

The width W2 of the blocking member 40 satisfying the above relationship can achieve a good balance between blocking the adhesive and improving the energy density.

Optionally, this application provides a battery 10. Referring to FIGs. 6 to 8 and FIGs. 11 to 13, the battery 10 includes 20 battery cells 21, where two battery cells 21 are arranged in a battery row 20a along a length direction X of the battery cells 21, and ten battery cells 21 are arranged in a battery column 20b along a width direction Y of the battery cells 21. The battery 10 further includes a blocking member 40, where the blocking member 40 is placed in the first gap 201 formed by two adjacent battery rows 20a. The blocking member 40 is a frame-like structure and made of rubber, and the blocking member 40 includes a blocking portion 41 and a fixing portion 42. The blocking portion 41 is a border in the frame close to the bottom surface of the battery cell 21, and the fixing portion 42 is the other three borders in the frame. The blocking portion 41 includes an extension portion 41a, where the extension portion 41a is located in the second gap 202 formed by two adjacent battery columns 20b and extends along the width direction Y of the battery cell 21 away from the fixing portion 42. The length of the battery cell 21 is L1 (in millimeters), the length of the blocking member 40 is L2 (in millimeters), the width of the battery cell 21 is W1 (in millimeters), and the width of the blocking member 40 is W2 (in millimeters), where $L2 = 2 * L1 - 10$ and $W2 = 0.1 * W1$.

The second aspect of the application provides an electric device, including any battery provided in the first aspect of the application, and the battery is configured to supply electric energy.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

**Claims**

1. A battery, comprising:

   at least four battery cells, wherein at least two of the battery cells are arranged in a battery row along a length direction of the battery cells, and at least two of the battery cells are arranged in a battery column along a width direction of the battery cells; and
   a blocking member, wherein the blocking member is placed in a first gap created by two adjacent battery rows, and the blocking member is configured to block adhesive on a bottom surface of the battery cell from spreading towards an end cover direction of the battery cell.

2. The battery according to claim 1, wherein the blocking member comprises:

   a blocking portion, wherein the blocking portion is provided at an end of the blocking member close to the bottom surface of the battery cell, and the blocking portion is configured to block the adhesive on the bottom surface of the battery cell from spreading towards the end cover direction of the battery cell; and
   a fixing portion, wherein the fixing portion is provided at another end of the blocking member, and the fixing portion is configured to connect to a lengthwise side of the battery cell.

3. The battery according to claim 2, wherein the blocking portion comprises an extension portion, the extension portion being located in a second gap created by two adjacent battery columns and extending along a height direction of the battery cell away from the fixing portion.

4. The battery according to claim 2, wherein the blocking portion comprises an extension portion, the extension portion being located in a second gap created by two adjacent battery columns and extending along the width direction of the battery cell away from the fixing portion.

5. The battery according to claim 3 or 4, wherein the battery row comprises n battery cells, and the blocking portion comprises m extension portions, wherein $1 \leq m \leq n - 1$.

6. The battery according to any one of claims 1 to 5, wherein the battery row comprises n battery cells, and in the length direction, length of the battery cell is L 1 and length of the blocking member is L2; wherein

   $$L1 < L2 \leq n * L1.$$

7. The battery according to claim 6, wherein the length L1 and the length L2 are measured in millimeters, and $n * L1 - 10 \leq L2 \leq n * L1$.

8. The battery according to any one of claims 1 to 7, wherein in the width direction, width of the battery cell is W1 and width of the blocking member is W2, wherein $0.1 * W1 \leq W2 \leq 0.15 * W1$.

9. The battery according to any one of claims 1 to 8, wherein the blocking member is made of rubber.

10. An electric device, comprising the battery according to any one of claims 1 to 9, wherein the battery is configured to supply electric energy.

FIG. 1

FIG. 2

FIG. 3

20

FIG. 4

21

FIG. 5

FIG. 6

FIG. 7

FIG. 8

40

FIG. 9

10

202    42

Z

X

212R    212R    41

21    41a

FIG. 10

40

42

41a

FIG. 11

FIG. 12

FIG. 13

## INTERNATIONAL SEARCH REPORT

International application No.

**PCT/CN2022/125493**

**A.    CLASSIFICATION OF SUBJECT MATTER**

H01M 50/291(2021.01)i;  H01M 50/209(2021.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 电池, 电芯, 列, 底部, 胶, 粘接剂, 溢出, 扩散, battery, cell, row, bottom, glue, adhesive, overflow, diffuse

**C.    DOCUMENTS CONSIDERED TO BE RELEVANT**

| Category* | Citation of document, with indication, where appropriate, of the relevant passages | Relevant to claim No. |
|---|---|---|
| PX | CN 216389634 U (NINGDE CONTEMPORARY AMPEREX TECHNOLOGY CO., LTD.) 26 April 2022 (2022-04-26) description, paragraphs 41-77, and figures 1-13 | 1-10 |
| X | CN 111430621 A (SVOLT ENERGY TECHNOLOGY CO., LTD.) 17 July 2020 (2020-07-17) description, paragraphs 40-69, and figures 1-12 | 1, 6-10 |
| Y | CN 111430621 A (SVOLT ENERGY TECHNOLOGY CO., LTD.) 17 July 2020 (2020-07-17) description, paragraphs 40-69, and figures 1-12 | 2-5 |
| Y | CN 208955062 U (NINGDE CONTEMPORARY AMPEREX TECHNOLOGY CO., LTD.) 07 June 2019 (2019-06-07) description, paragraphs 39-55, and figures 1-6 | 2-5 |
| X | CN 111653700 A (SVOLT ENERGY TECHNOLOGY CO., LTD.) 11 September 2020 (2020-09-11) description, paragraphs 57-114, and figures 1-23 | 1, 6-10 |

☑ Further documents are listed in the continuation of Box C.        ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **14 December 2022** | **29 December 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/125493** |

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 111653700 A (SVOLT ENERGY TECHNOLOGY CO., LTD.) 11 September 2020 (2020-09-11)<br>    description, paragraphs 57-114, and figures 1-23 | 2-5 |
| Y | CN 211208505 U (BYD CO., LTD.) 07 August 2020 (2020-08-07)<br>    description, paragraphs 29-41, and figures 1-4 | 2-5 |
| X | JP 2009134937 A (SANYO ELECTRIC CO., LTD.) 18 June 2009 (2009-06-18)<br>    description, paragraphs 13-29, and figures 1-4 | 1-2, 6-7, 10 |
| A | CN 113224446 A (ZHEJIANG LEAPMOTOR TECHNOLOGY CO., LTD.) 06 August 2021 (2021-08-06)<br>    entire document | 1-10 |
| A | JP 2019071261 A (TOSHIBA CORP. et al.) 09 May 2019 (2019-05-09)<br>    entire document | 1-10 |

Form PCT/ISA/210 (second sheet) (January 2015)

INTERNATIONAL SEARCH REPORT
Information on patent family members

International application No.

**PCT/CN2022/125493**

| Patent document cited in search report | | | Publication date (day/month/year) | Patent family member(s) | | | Publication date (day/month/year) |
|---|---|---|---|---|---|---|---|
| CN | 216389634 | U | 26 April 2022 | None | | | |
| CN | 111430621 | A | 17 July 2020 | CN | 111430621 | B | 22 March 2022 |
| CN | 208955062 | U | 07 June 2019 | None | | | |
| CN | 111653700 | A | 11 September 2020 | CN | 111653700 | B | 27 May 2022 |
| CN | 211208505 | U | 07 August 2020 | None | | | |
| JP | 2009134937 | A | 18 June 2009 | None | | | |
| CN | 113224446 | A | 06 August 2021 | CN | 214754011 | U | 16 November 2021 |
| JP | 2019071261 | A | 09 May 2019 | JP | 6845116 | B2 | 17 March 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202122624721